# EUROPEAN PATENT APPLICATION

(11) **EP 3 714 835 A1**
(43) Date of publication of application: **30.09.2020**
(21) Application number: 19166058.8
(22) Date of filing: 29.03.2019
(51) Int. Cl.: A61C 8/00

(54) **AN IMPLANT SYSTEM FOR USE IN DENTISTRY**

(71) Applicant: Jan Berg Invest ApS, 4684 Holmegaard (DK)
(72) Inventor: BERG, Jan, 4684 Holmegaard (DK); BERG, Lise Hjorth, 2800 Lyngby (DK)
(74) Representative: Kristensen, Martin Hjelm

(57) **Abstract**

An improved abutment system 100 for use in dentistry is disclosed. The abutment system comprises: an abutment 2, a fastening screw 6, locking assembly 8 configured for locking the fastening screw 6 to the abutment 2; wherein the locking assembly comprises a locking pin 10 and a locking nut 12. The fastening screw 6 comprises a first axial end 14 and an opposite second axial end 16; the first axial end 14 being configured for being screwed into a dental implant 4. The locking pin 10 comprises a first axial end 18 and an opposite, second axial end 20. The abutment 2 comprises an inner oblong cavity 22; which cavity at a bottom part 24 thereof comprises a through-going hole 26 for the fastening screw. The first axial end 18 of the locking pin 10 comprises a first engagement means 28 and the second axial end 16 of the fastening screw 6 comprises a second engagement means 30; wherein the first engagement means 28 is being configured for entering into locking engagement with the second engagement means 30. The second axial end 20 of the locking pin 10 comprises a third engagement means 34 and the locking nut 12 comprises a fourth engagement means 38; wherein the third engagement means 34 is being configured for entering into locking engagement with the fourth engagement means 38. Finally, an outer surface 40 of the locking nut 12 is defining a fifth engagement means 42 and a surface 44 of the inner oblong cavity 22 of the abutment 2 defines a sixth engagement means 46; wherein the fifth engagement means 42 is configured for entering into locking engagement with the sixth engagement means 46 of the abutment 2.

## Description

### Field of the invention

The present invention relates in general to the field of dentistry. More specifically in a first aspect the present invention relates to an abutment system for use in dentistry. In a second aspect the present invention relates to an implant system for use in dentistry. In a third aspect the present invention relates to a use of the abutment system or of the implant system of the first or second aspect, respectively, in the field of dentistry. The present invention relates in a fourth aspect to a method for mounting an abutment to a dental implant.

### Background of the invention

Within the field of dentistry various techniques for strengthening or reestablishing dental crowns have been known for decades.

One such technique involves establishing a bridge which bridges one or more new dental crowns to an existing dental crown. Thereby, the existing dental crown acts as a mechanical foundation for two or more adjacent dental crowns.

Another technique involves implanting an implant into a jaw bone of an individual and subsequently mounting a dental crown to this implant. As the part of the implant which is to be connected to the dental crown is rather small, an intermediate abutment is arranged between the implant and the dental crown. Hereby the forces exerted upon chewing will be distributed over an area defined by the interface between the abutment and the dental crown.

As this interface area is much larger, compared to the interface area between an implant and a dental crown, in a situation in which no intermediate abutment is applied, the mechanical stresses exerted to the dental crown is thereby considerably reduced. This will in turn imply a prolonged life span of the implant system comprising the dental crown, the abutment and the dental implant.

The dental implant systems currently used accordingly comprises a dental implant to be implanted into a jaw bone of an individual, a dental crown and an abutment acting as an interface between the dental crown and the dental implant. Moreover, a fastening screw is included in the implant system.

In the process of establishing a new dental crown, the dental implant is implanted into a jaw bone of an individual. After having been properly osseointegrated into the jawbone the abutment comprising a through-going hole is arranged onto the exposed axial end of the dental implant. Subsequently, the fastening screw is screwed through that through-going hole and into the dental implant. Finally, the dental crown is glued to the abutment.

Although dental implants are generally considered to be of higher mechanical strength, compared to dental bridges, when restoring dental crown, dental implant systems nevertheless suffer from certain disadvantages.

One of these disadvantages is that it is not uncommon that the fastening screw, fastening the abutment to the dental implant, will loosen over time. This obviously has the ultimate consequence that also the dental crown will loosen. Such situations require removal of the dental crown, refastening of the fastening screw and mounting of the dental crown again.

Such procedures are time consuming and implies expenses to the individual having the dental implant.

US 5,704,788 discloses a system for avoiding the loosening of a fastening screw being used for fastening an abutment to a dental implant. The system disclosed in US 5,704,788 comprises an implant, an abutment, a fastening screw for fastening the abutment to the dental implant. The abutment comprises an inner oblong cavity having a number of axially oriented locking grooves. The fastening screw comprises in one end opposite to the threaded end a socket bore. The system moreover comprises a locking member having a first axial end and a second axial end. The first axial end comprises a shank having a geometry which is adapted to enter into engagement with the socket bore of the fastening screw. The second axial end of the locking member comprises a number of locking tabs which are configured for being able to slide in the locking grooves of the abutment.

In use of the abutment of the system disclosed in US 5,704,788, the fastening screw is pushed through a through-going hole in the oblong cavity of the abutment and screwed into the implant. Once fastened, the locking member with its locking tabs arranged in the locking grooves in the abutment is slit into the oblong cavity of the abutment in such a way that shank of the locking member enters into locking engagement with the socket bore of the fastening screw.

Hereby, the fastening screw will be fixed to the locking member, which in turn will be locked to the abutment. The net effect of the system of US 5,704,788 is accordingly that the fastening screw will be locked to the abutment.

Despite the fact that the system of US 5,704,788 provides for avoiding a situation in which a fastening screw fastening, an abutment to a dental implant, over time will become loose, the system described in US 5,704,788 nevertheless has its shortcomings.

One of these shortcomings is that upon fastening the fastening screw, e.g. by using an Allen key entering into engagement with the socket bore of the fastening screw, it will be very difficult for the practitioner to determine the rotational positions of the fastening screw at which the tabs of the locking member will be able to slide into the oblong cavity of the abutment (having its locking tabs arranged in the locking grooves of the abutment). In other words, as the practitioner is fastening the fastening screw, while monitoring the applied torque, he/she will not know, whether the rotational position at which the appropriate torque has been reached, allows the locking member to slide into the oblong opening of the abutment, and enter into locking engagement with the fastening screw.

Accordingly, the practitioner very often encounters a situation in which the required fastening torque of the fastening screw has been reached and where the angular position of the screw does not allow the locking member to enter into locking engagement with the abutment as well as with the fastening screw.

Consequently, in such a situation, the locking member must be removed in order to either further fastening the fastening screw, or alternatively, loosened it so as to align the fastening screw in an orientation where the locking tabs of the locking member fits into the grooves of the abutment, while simultaneously fitting into the socket bore of the fastening screw, thus locking the system.

Finding this precise angulation of the fastening screw is a time-consuming task where, the practitioner must repeatedly dismantle the locking member and apply the fastening tool, which makes up an enormous and time-consuming amount of instrument exchanges before success can reasonably be expected if success is at all probable.

Additionally, such repetitive mounting and dismounting can lead to mechanical fatigue in the fastening screw and the implant, thus contributing to the risk of premature failure of the implant.

It is an objective of the present invention to provide systems, uses and methods which overcome the disadvantages of the prior art devices.

### Brief description of the invention

These objectives are fulfilled according to the first, the second, the third and the fourth aspect of the present invention.

Accordingly, the first aspect of the present invention relates to an abutment system for use in dentistry, said abutment system comprises:
- an abutment configured for being fastened to a dental implant;
- a fastening screw;
- a locking assembly configured for locking said fastening screw to said abutment; said locking assembly comprises a locking pin and a locking nut;
- wherein said fastening screw comprises a first axial end and an opposite second axial end, said first axial end being configured for being screwed into a dental implant;
- wherein said locking pin comprises a first axial end and an opposite, second axial end;
- wherein said abutment comprises an inner oblong cavity; said cavity at a bottom part thereof comprises a through-going hole for said fastening screw;
- wherein said first axial end of said locking pin comprises a first engagement means; and wherein said second axial end of said fastening screw comprises a second engagement means; said first engagement means is being configured for entering into locking engagement with said second engagement means of said fastening screw;
- wherein said second axial end of said locking pin comprises a third engagement means; and wherein said locking nut comprises a fourth engagement means; said third engagement means of said locking pin is being configured for entering into locking engagement with said fourth engagement means of said locking nut;
- wherein an outer surface of said locking nut is defining a fifth engagement means; and wherein a surface of said inner oblong cavity of said abutment defines a sixth engagement means, wherein said fifth engagement means of said locking nut is configured for entering into locking engagement with said sixth engagement means of said abutment.

In a second aspect, the present invention relates to an implant system comprising an abutment system according to the first aspect in combination with a dental implant for being implanted into a jaw bone.

In a third aspect the present invention relates to the use of an abutment system according to the first aspect of the present invention; or of an implant system according to the second aspect of the present invention for restoring a dental crown in the mouth of an individual.

In a fourth aspect, the present invention relates to a method for mounting an abutment to a dental implant, said method comprises the steps of:
i) implanting a dental implant in a jaw bone and awaiting said implant to become properly osseointegrated into said jaw bone;
ii) providing an abutment system according the first aspect of the present invention;
iii) arranging the abutment of said abutment system onto said dental implant in such a way that an axial end of said dental implant abuts an outer surface of said abutment;
iv) arranging said fastening screw through said through-going hole of said bottom part of said abutment;
v) arranging said locking pin onto said fastening screw in such a way that said first engagement means of said locking pin enters into engagement with said second engagement means of said fastening screw;
vi) arranging said locking nut onto said second axial end of said locking pin in such a way that said third engagement means of said locking pin enters into locking engagement with said fourth engagement means of said locking nut;
vii) turning said locking nut, thereby fastening said fastening screw to said implant, while monitoring the torque applied to said locking nut;
viii) once the desired torque has been reached, sliding said locking nut into said oblong cavity of said abutment, thereby ensuring that said fifth engagement means of said locking nut enters into locking engagement with said sixth engagement means of said inner oblong cavity of said abutment; and thereby locking the fastening screw to said abutment.

The present invention in its various aspects provides for improving the fastening of a dental abutment to a dental implant.

Another advantage is that the locking assembly allows for ensuring that the fastening screw is under constant torque when it is locked, making the system able to absorb minor deformations and fatigue caused by chewing activity.

Yet another advantage of the invention is that it closes the opening of the abutment, thus shielding the oblong cavity thereof from contamination and facilitating the removal of the fastening screw and the abutment.

### Brief description of the figures

Fig. 1 is a perspective view illustrating a dental implant system according to the prior art.
Fig. 2 is a plan view of a dental abutment system according to the invention.
Fig. 3 is a cross-sectional view illustrating a partly assembled implant system of the invention.
Fig. 4 is a cross-sectional view illustrating the implant system of Fig. 3 in a fully assembled state.
Fig. 5 and 6 are cross-sectional views illustrating an alternative embodiment of the locking nut of the abutment system of the invention.
Fig. 7a - 7e are cross-sectionals views of cylinders and illustrate the concept of partly rotational symmetry as applied in the present patent application.
Fig. 8 is a plan view illustrating an alternative embodiment of a locking assembly of the abutment system according to the first aspect of the present invention.

### Detailed description of the invention

### The first aspect of the present invention

Accordingly, the first aspect of the present invention relates to an abutment system for use in dentistry, said abutment system comprises:
- an abutment configured for being fastened to a dental implant;
- a fastening screw;
- a locking assembly configured for locking said fastening screw to said abutment; said locking assembly comprises a locking pin and a locking nut;
- wherein said fastening screw comprises a first axial end and an opposite second axial end, said first axial end being configured for being screwed into a dental implant;
- wherein said locking pin comprises a first axial end and an opposite, second axial end;
- wherein said abutment comprises an inner oblong cavity; said cavity at a bottom part thereof comprises a through-going hole for said fastening screw;
- wherein said first axial end of said locking pin comprises a first engagement means; and wherein said second axial end of said fastening screw comprises a second engagement means; said first engagement means is being configured for entering into locking engagement with said second engagement means of said fastening screw;
- wherein said second axial end of said locking pin comprises a third engagement means; and wherein said locking nut comprises a fourth engagement means; said third engagement means of said locking pin is being configured for entering into locking engagement with said fourth engagement means of said locking nut;
- wherein an outer surface of said locking nut is defining a fifth engagement means; and wherein a surface of said inner oblong cavity of said abutment defines a sixth engagement means, wherein said fifth engagement means of said locking nut is configured for entering into locking engagement with said sixth engagement means of said abutment.

As it appears above the locking assembly of the abutment system comprises two parts, viz a locking pin and a locking nut. This design will improve the process of combined tensioning of the fastening screw to the implant on the one hand and locking of the fastening screw to the abutment on the other hand. This is disclosed in further detail below.

In the present description and in the appended claims the term "locking engagement" of two engagement means shall be construed to mean, that once these two engagement means have entered into locking engagement with each other, that two engagement means cannot perform any rotational movement, around their axial axis, in relation to each other.

The engagement and disengagement of two engagement means, which are configured to enter into engagement with each other, is preferably being performed by axially displacing these two engagement means, relative to each other.

In the present description and in the appended claims, the term "male element" or "male cylinder" may be construed to mean an element or a cylinder comprising a convex surface.

Likewise, in the present description and in the appended claims, the term "female element" or "female cylinder" may be construed to mean an element or a cylinder comprising a concave surface.

In one embodiment of the abutment system according to the first aspect of the present invention said first and said second engagement means independently are configured for entering into releasably engagement with each other and/or said third and said fourth engagement means independently are configured for entering into releasably engagement with each other and/or wherein said fifth and said sixth engagement means independently are configured for entering into releasably engagement with each other.

In this embodiment, two specific engagement means, which are configured for entering into engagement with each other, can do so, yet also allow the reversible operation of disengagement in relation to each other. It is preferred that any two specific engagement means, which are configured for entering into engagement with each other, are separate entities, and hence not being integral entities.

In one embodiment of the abutment system according to the first aspect of the present invention the first engagement means of said first axial end of said locking pin comprises a male element, and wherein said second engagement means of said second axial end of said fastening screw comprises a female element; or wherein the first engagement means of said first axial end of said locking pin comprises a female element, and wherein said second engagement means of said second axial end of said fastening screw comprises a male element.

This is a preferred embodiment because the locking pin itself defines a male element. Accordingly, it will be easy to provide the fastening screw with a corresponding female element in the second end thereof, and which is configured for entering into engagement with the first engagement means.

In one embodiment of the abutment system according to the first aspect of the present invention said male element defines a male cylinder having a non-circular cross-section, and wherein said female element defines a female cylinder having a non-circular cross-section.

Providing the first engagement means and the second engagement means as male and female cylinders, respectively, ensures that the first engagement means and the second engagement means, respectively can be pushed a sufficiently distance into each other, as cylinders are characterized in having a constant cross-section in an axial direction.

In one embodiment of the abutment system according to the first aspect of the present invention said third engagement means of said locking pin and said fourth engagement means of said locking nut are configured for being able to slide in an axial direction in relation to each other, while being engaged in a locking engagement with each other.

This embodiment ensures that the locking nut can be slit along the axial axis of the locking pin in the operation of pushing the locking nut into the oblong cavity in the abutment.

In one embodiment of the abutment system according to the first aspect of the present invention the third engagement means of said locking pin defines a non-circular male cylinder, and wherein said fourth engagement means of said locking nut defines a hole in the form of a non-circular female cylinder.

In one embodiment of this embodiment said hole in said locking nut is a through-going hole or is a non-through-going hole.

In the event the hole in the locking nut is a through-going hole, the locking nut may be pushed and hidden in the oblong cavity of the abutment, once the required and desired tensioning torque of the fastening screw has been obtained.

In one embodiment of the abutment system according to the first aspect of the present invention the locking nut is comprising a first axial portion and an opposite, second axial portion, wherein said first axial portion of said locking nut is having an extension in a direction perpendicular to its axial direction, which is sufficiently small to prevent a surface of said first axial portion to enter into locking engagement with the sixth engagement means of the abutment, whereas said second axial portion of said locking nut is having an extension in a direction perpendicular to its axial direction, which allows a surface of said second axial portion to enter into locking engagement with the sixth engagement means of the abutment.

This embodiment allows the first axial portion of the locking nut to partly enter the oblong cavity of the abutment, thereby aiding in supporting the locking nut while being rotated with the purpose of rotating the fastening screw.

In one embodiment of the abutment system according to the first aspect of the present invention the third engagement means of said locking pin defines a non-circular, female cylinder, and wherein said fourth engagement means of said locking nut defines a non-circular, male cylinder.

This embodiment represents another design of the locking assembly comprising the locking pin and the locking nut.

In one embodiment of the abutment system according to the first aspect of the present invention the cross-section of said fifth engagement means and said sixth engagement means independently comprises a non-circular, partly rotational symmetrical geometry, (PRS).

In one embodiment of the abutment system according to this embodiment the partly rotational symmetrical geometry is selected from a partly rotational symmetry PRS of 360°/N, wherein N is an integer selected from the range of 2 - 100, such as 3 - 95, e.g. 4 - 90, such as 5 - 85, for example 6 - 80, such as 7 - 75, such as 8 - 70, for example 9 - 65, such as 10 - 60, e.g. 15 - 55, such as 20 - 50, for example 25 - 45 or 30 - 40; 360°/N thereby denotes the minimum magnitude of angular turn, around an axial axis, which will bring the geometry of said fifth engagement means and/or said sixth engagement means, as the case may be, into a similar orientation.

Whereas there are virtually no limitations to the geometries of the first and second engagement means on the one hand, and of the third and the fourth engagement means on the other hand (as long as they are having a non-circular cross-section and are being configured for entering into engagement with each other), it is preferred that the fifth and sixth engagement means, respectively, are having geometries that represent partly rotational symmetries which allow a relative large number of relative angular orientations in which the fifth and the sixth engagement means are able to enter into engagement with each other. This is so, because such geometries allow for relatively small incremental tensioning of the fastening screw, while still allowing the fifth engagement means to enter into locking engagement with the sixth engagement means.

On the contrary, the first and second engagement means on the one hand, and of the third and the fourth engagement means on the other hand may have the shape corresponding to those which are know from screwdriver bits. These geometries include a slotted or straight geometry, Torx geometry, square geometry, tri-wing geometry, hexagonal geometry, Frearson geometry, spanner geometry, 5 node geometry. Other geometries may be contemplated. However, it is preferred that the geometry of the first and second engagement means on the one hand, and of the third and the fourth engagement means on the other hand is cylindrical.

In one embodiment of the abutment system according to the first aspect of the present invention said first engagement means of said locking pin is having an extension in a direction perpendicular to its axial direction which is larger than the extension, in the same direction, of said second axial end of said locking pin.

This embodiment allows pulling out the locking nut, in a situation where the locking nut is accommodated in the oblong cavity of the abutment, simple by pulling the locking pin.

In one embodiment of the abutment system according to the first aspect of the present invention said abutment is having an outer extension in an axial direction of 3 - 20 mm, such as 4 - 19 mm, e.g. 5 - 18 mm, such as 6 - 17 mm, for example 7 - 16 mm, e.g. 8 - 15 mm, for example 9 - 14 mm, such as 10 - 13 mm or 11 - 12 mm.

In one embodiment of the abutment system according to the first aspect of the present invention the oblong cavity of said abutment is having an inner extension, excluding said through going hole 26, in an axial direction of 2 - 12 mm, such as 3 - 11 mm, such as 4 - 10 mm, e.g. 5 - 9 mm or 6 - 8 mm.

In one embodiment of the abutment system according to the first aspect of the present invention said abutment is having an outer extension in a direction perpendicular to said axial direction thereof of 2 - 10 mm, such as 3 - 9 mm, e.g. 4 - 8 mm or 5 - 7 mm.

In one embodiment of the abutment system according to the first aspect of the present invention said oblong cavity of said abutment is having a maximum extension in a direction perpendicular to its axial direction of 1.5 - 9. 5 mm, such as 2 - 9 mm, such as 3 - 8 mm, e.g. 4 - 7 mm or 5 - 6 mm.

It should be noted that the oblong cavity of the abutment preferably is having a geometry at least partly defining a female cylinder having a non-circular cross-section.

In one embodiment of the abutment system according to the first aspect of the present invention said fastening screw is having an maximum outer extension in an axial direction of 2.5 - 10 mm, such as 3 - 9 mm, e.g. 4 - 8 mm or 5 - 7 mm.

In one embodiment of the abutment system according to the first aspect of the present invention said fastening screw is having a maximum outer extension in a direction perpendicular to its axial direction of 0.5 - 4 mm, such as 1 - 3 mm.

In one embodiment of the abutment system according to the first aspect of the present invention said locking pin is having an outer extension in an axial direction of 2 - 15 mm, such as 3 - 14 mm, such as 4 - 13 mm, e.g. 5 - 12 mm, for example 6 - 11 mm, such as 7 - 10 mm or 8 - 9 mm.

In one embodiment of the abutment system according to the first aspect of the present invention said locking pin is having a maximum outer extension in a direction perpendicular to its axial direction of 0.5 - 7 mm, such as 1 - 6 mm, for example 2 - 5 mm or 3 - 4 mm.

In one embodiment of the abutment system according to the first aspect of the present invention locking nut is having an extension in an axial direction of 1 - 12 mm, such as 2 - 11 mm, e.g. 3 - 10 mm, for example 4 - 9 mm, such as 5 - 8 mm or 6 - 7 mm.

In one embodiment of the abutment system according to the first aspect of the present invention said locking nut is having maximum outer extension in a direction perpendicular to its axial direction of 1.5 - 9 mm, such as 2 - 8 mm, for example 3 - 7 mm or 4 - 6 mm.

The above stated dimensions have proven beneficial when the abutment system is to be used in dentistry.

In one embodiment of the abutment system according to the first aspect of the present invention said locking pin and said locking nut constitute separate entities, or at least separable entities.

Providing the locking pin and the locking nut of the locking assembly as separate entities allows the easy and cost-efficient manufacture thereof.

In one embodiment of the abutment system according to the first aspect of the present invention said locking pin and said locking nut are comprising attachment means for intermittent avoiding, any mutual displacement in relation to each other, in an axial direction, when being in locking engagement with each other, caused solely by action of gravity, in a situation where the locking pin is arranged in a vertical direction.

In one embodiment of the abutment system according to the first aspect of the present invention said attachment means independently comprises magnetic and/or ferromagnetic properties of said pin and/or said locking nut, respectively.

In one embodiment of the abutment system according to the first aspect of the present invention said attachment means comprises tolerance of dimensions between the third engagement means and the fourth engagement means which are sufficiently narrow, so that an external force of 0.1 - 10 Newton, such as 0.5 - 9 Newton, such as 1 - 8 Newton, for example 1 - 7 Newton, such as 5 - 6 Newton, exerted onto the locking nut is required in order to displace, in an axial direction, said locking nut relative to said locking pin.

Providing the locking assembly with such attachment means limits the risk that the practitioner drops a part of the locking assembly into the throat of the individual being subject to the operation of installing the abutment system.

In one embodiment of the abutment system according to the first aspect of the present invention said locking screw, said locking pin, said locking nut and/or said abutment independently is being manufactured from a metal or an alloy, such as titanium, gold or stainless steel.

Such materials have proven beneficial as materials for the elements of the abutment system when used in dentistry. The same materials may be used in respect of the implant itself.

In one embodiment of the abutment system according to the first aspect of the present invention said abutment system furthermore comprises a dental crown, said dental crown comprises an inner cavity which is configured for being fitted to said abutment.

### The second aspect of the present invention

In a second aspect the present invention relates to an implant system comprising an abutment system according to the first aspect in combination with a dental implant for being implanted into a jaw bone.

Accordingly, the implant system of the second aspect of the present invention comprises those elements needed for preparing a dental implant to be fitted with a dental crown.

In one embodiment of the implant system according to the second aspect of the present invention the implant comprises a female thread and wherein said first axial end of said fastening screw comprises a male thread; wherein said male thread of said first axial end of said fastening screw and said female thread of said implant are being configured for entering into engagement with each other.

### The third aspect of the present invention

In a third aspect the present invention relates to the use of an abutment system according to the first aspect of the present invention; or of an implant system according to the second aspect of the present invention for restoring a dental crown in the mouth of an individual.

In one embodiment of the use according to the third aspect of the present invention said use is for a non-therapeutic, cosmetic purpose or is for a therapeutic purpose.

### The fourth aspect of the present invention

In a fourth aspect, the present invention relates to method for mounting an abutment to a dental implant, said method comprises the steps of:
i) implanting a dental implant in a jaw bone and awaiting said implant to become properly osseointegrated into said jaw bone;
ii) providing an abutment system according the first aspect of the present invention;
iii) arranging the abutment of said abutment system onto said dental implant in such a way that an axial end of said dental implant abuts an outer surface of said abutment;
iv) arranging said fastening screw through said through-going hole of said bottom part of said abutment;
v) arranging said locking pin onto said fastening screw in such a way that said first engagement means of said locking pin enters into engagement with said second engagement means of said fastening screw;
vi) arranging said locking nut onto said second axial end of said locking pin in such a way that said third engagement means of said locking pin enters into locking engagement with said fourth engagement means of said locking nut;
vii) turning said locking nut, thereby fastening said fastening screw to said implant, while monitoring the torque applied to said locking nut;
viii) once the desired torque has been reached, sliding said locking nut into said oblong cavity of said abutment, thereby ensuring that said fifth engagement means of said locking nut enters into locking engagement with said sixth engagement means of said inner oblong cavity of said abutment; and thereby locking the fastening screw to said abutment.

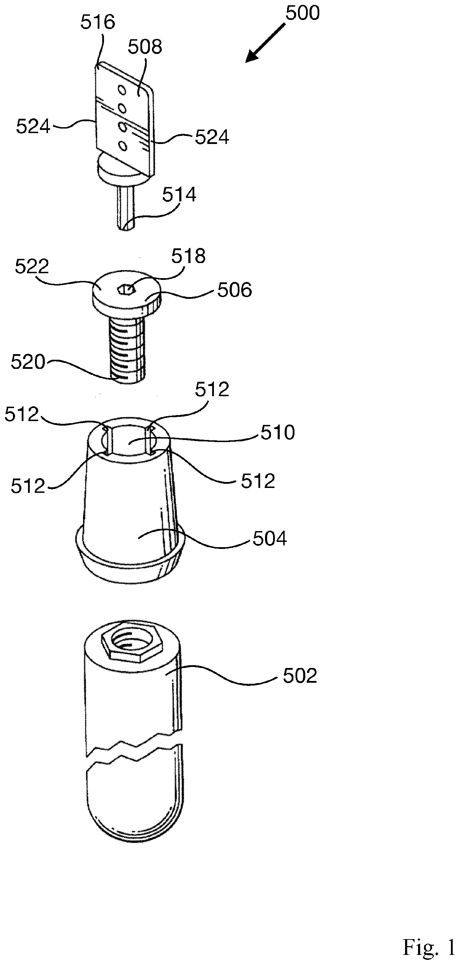

In one embodiment of the method according to the fourth aspect of the present invention said method is for a non-therapeutic, cosmetic purpose or is for a therapeutic purpose
Referring now to the drawings for better illustrating the present invention in its various aspects, fig. 1 is a perspective view illustrating a dental implant system according to the prior art system disclosed in US 5,704,788.

Fig. 1 shows the dental implant system 500 comprising a dental implant 502, an abutment 504, a fastening screw 506 and a locking member 508.

The geometry of the lower part of the abutment 504 and the geometry of the upper part of the dental implant 502 are adapted to each other so that the abutment 504 can be fitted onto the dental implant 502. The abutment 504 comprises an inner oblong cavity 510 having a four axially oriented grooves 512. The inner oblong cavity 510 of the abutment further comprises a through-going hole in the bottom for the fastening screw 506.

The fastening screw comprises a threaded end 520 and an opposite head end 522 comprising a socket bore 518.

The locking member 508 comprises a first axial end 514 and a second axial end 516. The first axial end 514 comprises a shank having a geometry which is adapted to enter into engagement with the socket bore 518 of the fastening screw 506. Furthermore, the locking member 508 comprises two locking tabs 524 which are configured for being able to slide in the locking grooves 512 of the abutment.

In use the fastening screw 506 is pushed through the through-going hole in the oblong cavity 510 of the abutment 504 and screwed into the implant 502. Once fastened to the recommended torque, the locking member 508 is, with its locking tabs 524 arranged in the locking grooves 512 in the abutment 504, slit into the oblong cavity 510 of the abutment in such a way that the shank 514 of the locking member 508 enters into locking engagement with the socket bore 518 of the fastening screw.

However, it may happen that once fastened to the required and recommended torque, the socket bore 518 of the fastening screw 506 is having an angular position which does not allow that the shank 514 of the locking member 508 can enter into locking engagement with the socket bore 518 of the fastening screw 506, when the locking tabs 524 of the locking member 508 are slit into each respective groove 512 of the abutment 504.

Consequently, in such a situation, the locking member 508 must be removed in order to either further fastening the fastening screw 506, or alternatively, loosened it so as to align the fastening screw 506 in an orientation where the locking tabs 524 of the locking member 508 fits into the grooves 512 of the abutment 504, while simultaneously fitting into the socket bore 518 of the fastening screw 506, thus locking the system.

Finding this precise angulation of the fastening screw 506 is a time-consuming task where, the practitioner must repeatedly dismantle the locking member 508 and apply the fastening tool, which makes up an enormous and time-consuming amount of instrument exchanges before success can reasonably be expected if success is at all probable.

Additionally, such repetitive mounting and dismounting can lead to mechanical fatigue in the fastening screw 506 and the implant 502, thus contributing to the risk of premature failure of the implant system 500.

The present invention solves these problems of the prior art dental abutment system.

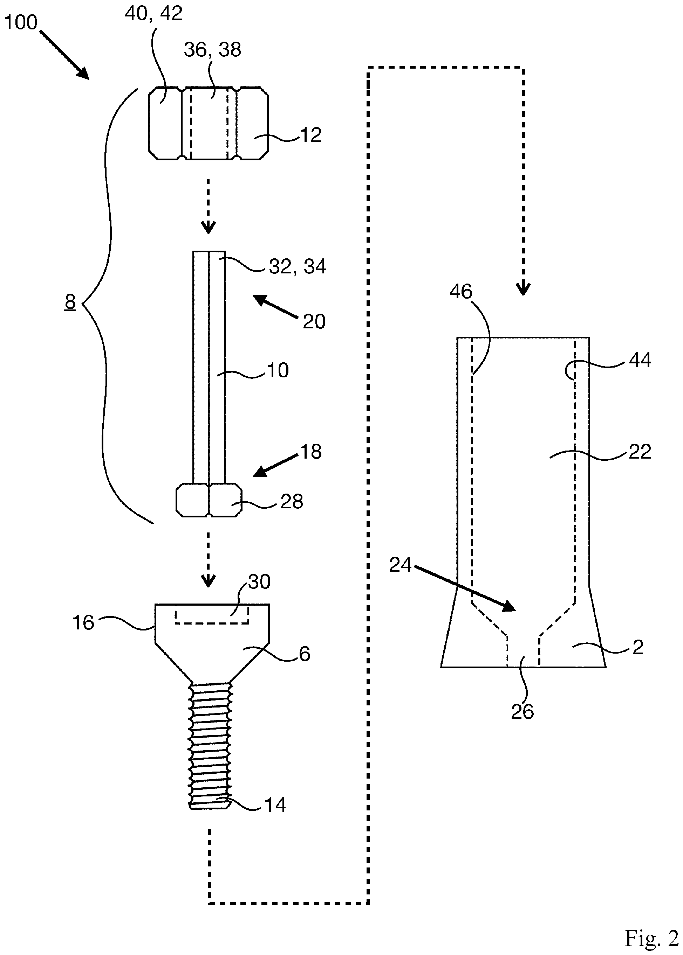

This is illustrated in Fig. 2. Fig. 2 is a plan view of a dental abutment system according to the invention in a disassembled state.

Fig. 2 shows the dental abutment system 100 comprising a dental abutment 2, a fastening screw 6, a locking assembly 8 comprising a locking pin 10 and a locking nut 12.

It is seen that the fastening screw 6 comprises a first axial end 14 and an opposite second axial end 16.

The first axial end 14 is being configured for being screwed into a dental implant 4 (not seen in Fig. 2).

It is also seen that the locking pin 10 comprises a first axial end 18 and an opposite, second axial end 20.

The abutment 2 comprises an inner oblong cavity 22. The cavity at a bottom part 24 thereof comprises a through-going hole 26 for the fastening screw.

The first axial end 18 of the locking pin 10 comprises a first engagement means 28 in the form of a hexagonal male element and the second axial end 16 of the fastening screw 6 comprises a second engagement means 30 in the form of a female hexagonal element. The first engagement means 28 of the locking pin 10 is configured for entering into locking engagement with the second engagement means 30 of said fastening screw 6.

Fig. 2 also shows that an outer surface 32 of the second axial end 20 of the locking pin 10 defines a third engagement means 34 in the form of a hexagonal male element. The locking nut 12 is comprising a hole 36, which is a through-going hole, and that hole 36 of the locking nut 12 defines a fourth engagement means 38 In the form of a hexagonal cylinder.

The third engagement means 34 of the locking pin 10 is being configured for entering into locking engagement with the fourth engagement means 38 of the locking nut 12.

Finally, it is seen in Fig. 2 that an outer surface 40 of the locking nut 12 is defining a fifth engagement means 42; and that a surface 44 of the inner oblong cavity 22 of the abutment 2 defines a sixth engagement means 46. The fifth engagement means 42 of said locking nut 12 is configured for entering into locking engagement with the sixth engagement means 46 of said abutment 2. The fifth engagement means 42 of the locking nut 12 and the sixth engagement means 46 of the oblong opening 22 of the abutment 2 are in the form of a male and female octagonal cylinder, respectively.

Accordingly, upon assembly of the abutment system of the invention it can be assured that the first engagement means 28 of the locking pin enters into a locking engagement with the second engagement means 30 of the fastening screw 6; that the third engagement means 34 of the locking pin 10 enters into a locking engagement with the fourth engagement means 38 of the locking nut 12; and finally that the fifth engagement means 42 of the locking nut 12 enters into a locking engagement with the sixth engagement means 46 of the abutment 2.

In this way the fastening screw 6 will be locked to the abutment 2 via the locking pin 10 and the locking nut 12.

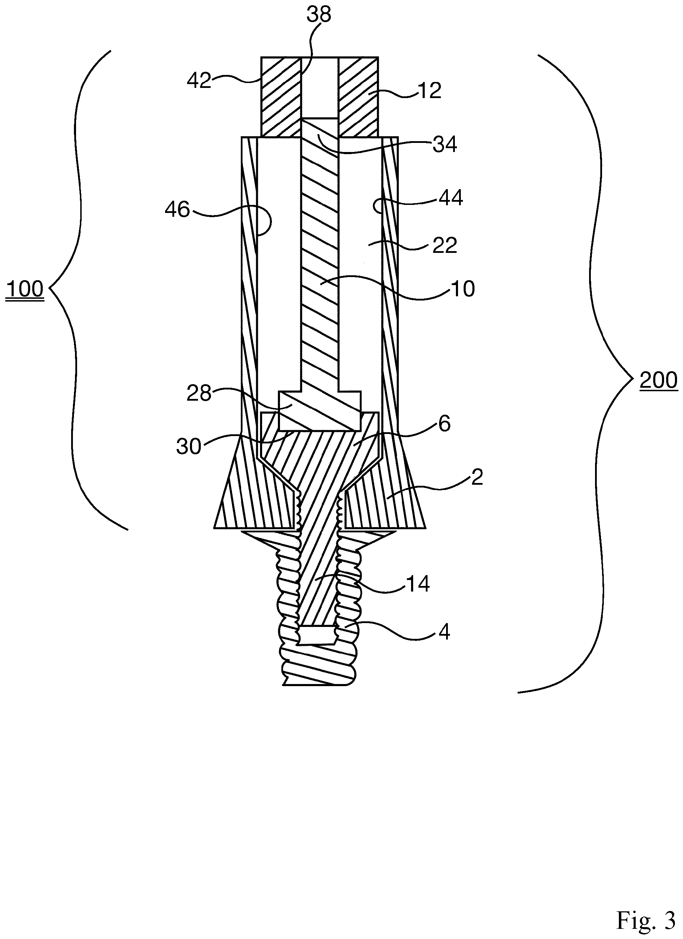

This is illustrated in Fig. 3. Fig. 3 is a cross-sectional view illustrating an assembled implant system according to the second aspect of the present invention. The implant system comprises an abutment system according to the first aspect in combination with a dental implant.

Accordingly, Fig. 3 shows the abutment system 100 in combination with an implant 4 to be implanted into the jaw bone of an individual.

In Fig. 3 it is seen that the implant system 200 has been assembled in such a way that the first axial end 14 of the fastening screw has been led through the through-going hole 26 of the abutment 2.

The first engagement means 28 of the locking pin has entered into engagement with the second engagement means 30 of the fastening screw 6. Likewise, the third engagement means 34 of the locking pin 10 has entered into locking engagement with the fourth engagement means 38 of the locking nut 12.

In this configuration, where the locking nut has not ben inserted into the oblong cavity 22 of the abutment 2, the locking nut can be turned around its axial axis, thereby fastening the fastening screw 6 to the implant 4.

This is typically performed while monitoring the torque exerted in the fastening of the screw 6, using a torque wrench.

Once the desired and recommended torque of fastening the fastening screw 6 to the implant 4 is being approached, the practitioner performing the operation, considers at which angular position the locking nut 12 is to be inserted into the oblong cavity 22 of the abutment.

He or she can easily make this consideration because he/she can see the angular position of the outer surface 40 of the locking nut 12, and hence also the angular position of the fifth engagement means 42, in relation to the angular position of the sixth engagement means 46 being in the form of the geometry of the inner surface 44 of the oblong cavity 22 of the abutment.

Accordingly, the practitioner will know, in a situation where a desired and recommended fastening torque of the fastening screw is approached whether to lock the locking nut 12 to the abutment at a current position, or rather to perform one or more incremental turnings of the locking nut.

Anyhow, once the desired and recommended fastening torque of the fastening screw has been reached, the practitioner locks the locking nut 12 to the abutment 2 by inserting the locking nut 2 into the oblong cavity 22 of the abutment. Hereby, the fifth engagement means 42 of the locking nut 12 enters into a locking engagement with the sixth engagement means 46 of the abutment 2.

This will in turn lock the fastening screw 6 to the abutment 2.

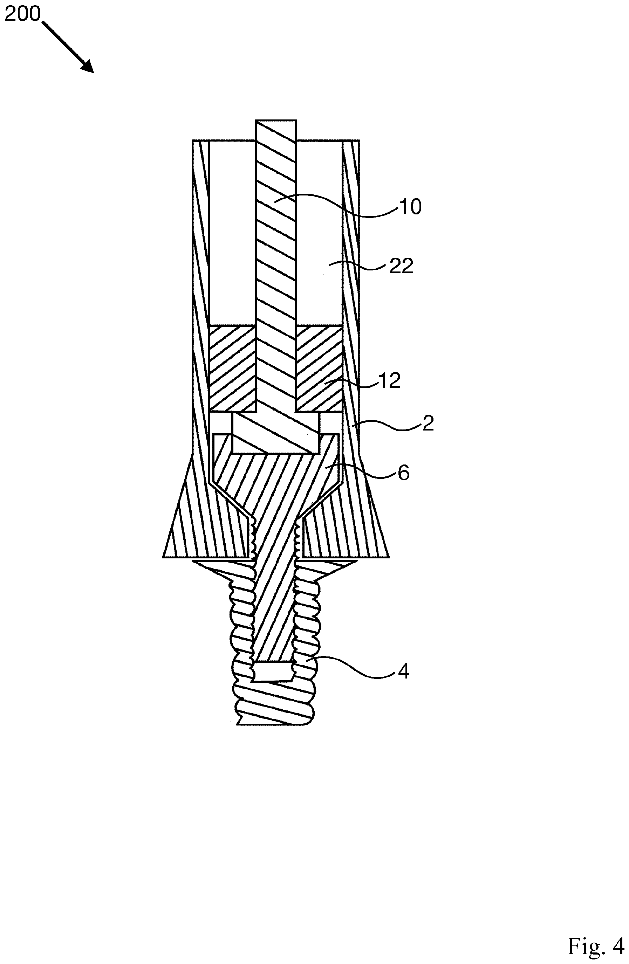

Such a situation is illustrated in Fig. 4. Fig. 4 is a cross-sectional view illustrating an assembled implant system according to the second aspect of the present invention in an assembled state.

It is seen that the locking nut 12 has been pushed into the oblong cavity 22 of the abutment. In this configuration the first engagement means 28 of the locking pin has entered into engagement with the second engagement means 30 of the fastening screw 6 and the third engagement means 34 of the locking pin 10 has entered into locking engagement with the fourth engagement means 38 of the locking nut 12 and the fifth engagement means 42 of the locking nut 12 has entered into a locking engagement with the sixth engagement means 46 of the abutment 2.

Thereby the fastening screw 6 is being locked to the abutment 2 via the locking pin 10 and the locking nut 12.

In the embodiments depicted in Fig. 2, 3 and 4 the third engagement means 34 of the locking pin 10 comprises a male element having a non-circular cross-section, and the fourth engagement means 38 of the locking nut 12 comprises a female element having a non-circular cross-section. However, alternative designs of the third and fourth engagement means, 34, 38, respectively, making up the locking assembly 8, is possible.

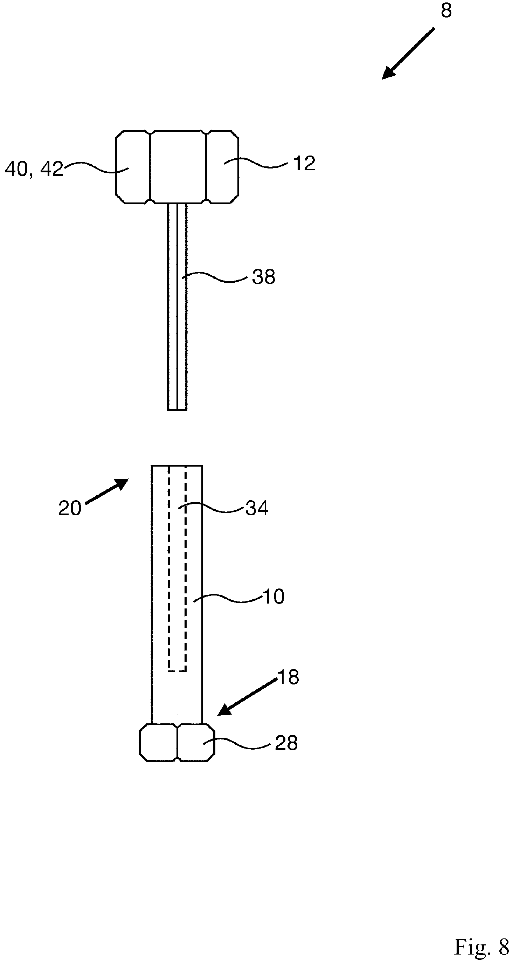

This is illustrated in Fig. 8. Fig 8 is a plan view illustrating such an alternative embodiment of a locking assembly of the abutment system according to the first aspect of the present invention.

Fig. 8 shows the locking assembly 8 of an abutment system 100. The locking assembly comprises the locking pin 10 and the locking nut 12. As seen the third engagement means 34 of the locking pin 10 comprises a female element having a non-circular cross-section. Likewise, the fourth engagement means 38 of the locking nut 12 comprises a male element having a non-circular cross-section. Again, the third engagement means 34 of the locking pin 10 is configured for entering into locking engagement with fourth engagement means 38 of the locking nut.

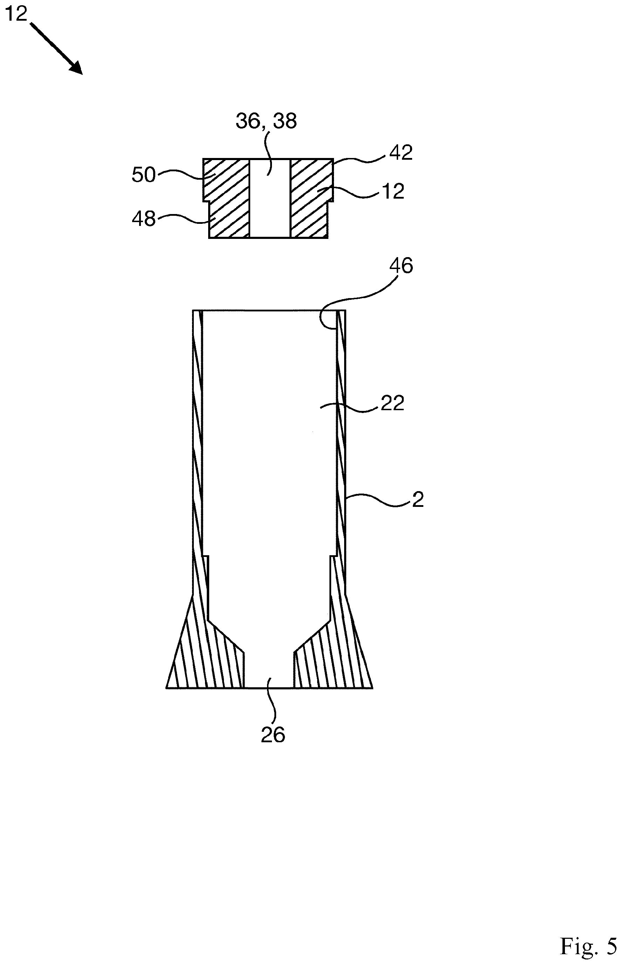

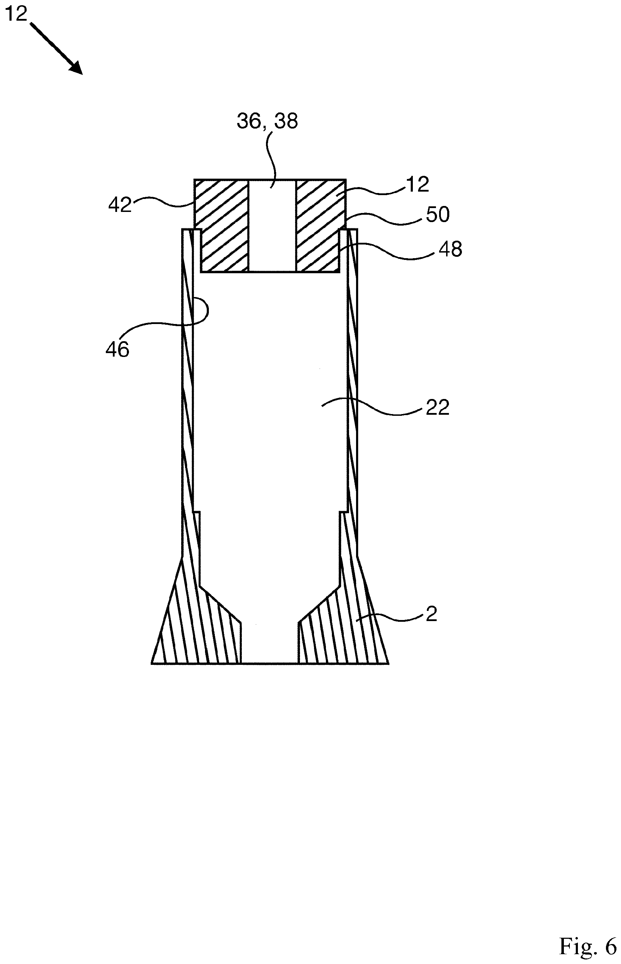

Fig. 5 and 6 are cross-sectional views illustrating an alternative embodiment of the locking nut.

In Fig. 5 is seen that the locking nut 12 comprises a first axial portion 48 and an opposite, second axial portion 50, wherein the first axial portion 48 of the locking nut 12 is having an extension in a direction perpendicular to its axial direction, which is smaller than the opposite second axial portion 50.

Thereby is achieved that the first axial portion 48 of the locking nut 12 can be inserted into the oblong cavity 22 of the abutment 2 without the surface thereof entering into a locking engagement with the sixth engagement means 46 of the abutment 2.

This design of the locking nut will aid in holding the locking nut 12 into place while using a torque wrench for fastening the fastening screw 6.

This situation is illustrated in Fig. 6.

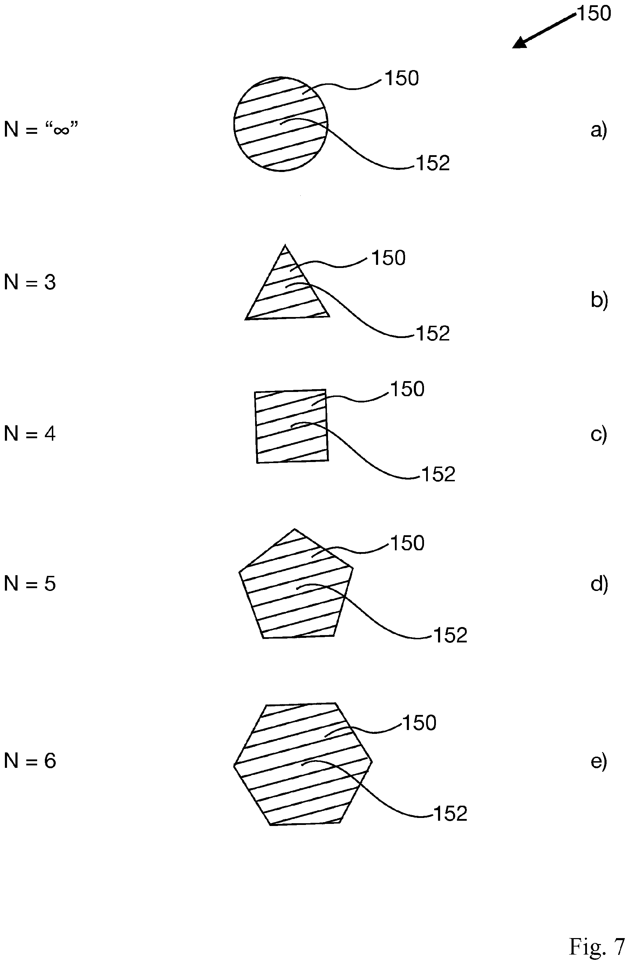

Fig 7 illustrate the concept of partly rotational symmetry as applied in the present patent application.

Fig. 7a - 7e show cross-sectionals views of cylinders 150 having an axial axis 152. Fig. 7a illustrates a cylinder having a circular cross-section. This means that for any number, X, whether being an integer or a non-integer, a rotation of magnitude 360°/X around the axis 152 will transfer the cylinder into an orientation similar to the previous orientation. Within the meaning of the present description and the appended claims, the cylinder in Fig. 7a is "fully-symetrical" and thereby not "partly-symmetrical". Accordingly, the number N of similar orientations in respect of the cylinder depicted in Fig. 7a is "∞" (infinite).

In contrast, the cylinders illustrated in Fig. 7b, 7c, 7d and 7e are having geometries which are not fully symmetrical. Rather these cylinders merely exhibit partly symmetry in the sense that there only exist a finite number of similar orientations of these cylinders. In other words, in respect of the cylinders depicted in Fig. 7b, 7c, 7d and 7e the minimum magnitude of rotation around the axial axis 152 which will bring the orientation of the cylinder into a similar orientation is 360°/N, wherein N is 3 in respect of Fig. 7. Likewise, N = 4 in respect of Fig. 7c, N= 5 in respect of Fig. 7d and N = 6 in respect of Fig. 7e.

Hereby it is clear how the term non-circular, "partly rotational symmetrical" (PRS) geometry, is to be interpreted.

It should be understood, that all features and achievements discussed above and in the appended claims in relation to one aspect of the present invention and embodiments thereof apply equally well to the other aspects of the present invention and embodiments thereof.

### List of reference numerals

- 2: Abutment
- 4: Dental implant
- 6: Fastening screw
- 8: Locking assembly
- 10: Locking pin
- 12: Locking nut
- 14: First axial end of fastening screw
- 16: Second axial end of fastening screw
- 18: First axial end of locking pin
- 20: Second axial end of locking pin
- 22: Inner oblong cavity of abutment
- 24: Bottom part of oblong cavity of abutment
- 26: Through going hole in bottom part of cavity of abutment
- 28: First engagement means of first axial end of locking pin
- 30: Second engagement means of second axial end of fastening screw
- 32: Outer surface of second axial end of locking pin
- 34: Third engagement means of second axial end of locking pin
- 36: Hole in locking nut
- 38: Fourth engagement means of locking nut
- 40: Outer surface of locking nut
- 42: Fifth engagement means of locking nut
- 44: Surface of inner oblong cavity of abutment
- 46: Sixth engagement means of inner surface of oblong cavity of abutment
- 48: First axial portion of locking nut
- 50: Second axial portion of locking nut
- 100: Abutment system according to the invention
- 150: Cylinder
- 152: Axial axis of cylinder
- 200: Implant system according to the invention
- 500: Dental implant system of the prior art
- 502: Implant
- 504: Abutment
- 506: Fastening screw
- 508: Locking member
- 510: Oblong cavity in abutment
- 512: Locking groove in abutment
- 514: First axial end/shank of locking member
- 516: Second axial end of locking member
- 518: Socket bore in fastening screw
- 520: Threaded end of fastening screw
- 522: Head end of fastening screw
- 524: Locking tabs of locking member

## Claims

1. An abutment system (100) for use in dentistry, said abutment system comprises:
- an abutment (2) configured for being fastened to a dental implant (4);
- a fastening screw (6);
- a locking assembly (8) configured for locking said fastening screw (6) to said abutment (2); said locking assembly comprises a locking pin (10) and a locking nut (12);
- wherein said fastening screw (6) comprises a first axial end (14) and an opposite second axial end (16); said first axial end (14) being configured for being screwed into a dental implant (4);
- wherein said locking pin (10) comprises a first axial end (18) and an opposite, second axial end (20);
- wherein said abutment (2) comprises an inner oblong cavity (22); said cavity at a bottom part (24) thereof comprises a through-going hole (26) for said fastening screw;
- wherein said first axial end (18) of said locking pin (10) comprises a first engagement means (28); and wherein said second axial end (16) of said fastening screw (6) comprises a second engagement means (30); said first engagement means (28) is being configured for entering into locking engagement with said second engagement means (30) of said fastening screw (6);
- wherein said second axial end (20) of said locking pin (10) comprises a third engagement means (34); and wherein said locking nut (12) comprises a fourth engagement means (38); said third engagement means (34) of said locking pin (10) is being configured for entering into locking engagement with said fourth engagement means (38) of said locking nut (12);
- wherein an outer surface (40) of said locking nut (12) is defining a fifth engagement means (42); and wherein a surface (44) of said inner oblong cavity (22) of said abutment (2) defines a sixth engagement means (46), wherein said fifth engagement means (42) of said locking nut (12) is configured for entering into locking engagement with said sixth engagement means (46) of said abutment (2).

2. An abutment system (100) according to claim 1, wherein independently said first and said second engagement means (28,30) are configured for entering into releasably engagement with each other and/or wherein said third and said fourth engagement means (34,38) are configured for entering into releasable engagement with each other and/or wherein said fifth and said sixth engagement means (42,46) are configured for entering into releasably engagement with each other.

3. An abutment system (100) according to claim 1 or 2, wherein the first engagement means (28) of said first axial end (18) of said locking pin (10) comprises a male element, and wherein said second engagement means (30) of said second axial end (16) of said fastening screw (6) comprises a female element; or wherein the first engagement means (28) of said first axial end (18) of said locking pin (10) comprises a female element, and wherein said second engagement means (30) of said second axial end (16) of said fastening screw (6) comprises a male element.

4. An abutment system (100) according to claim 3, wherein said male element defines a male cylinder having a non-circular cross-section, and wherein said female element defines a female cylinder having a non-circular cross-section.

5. An abutment system (100) according to any of the preceding claims, wherein said third engagement means (34) of said locking pin (10) and said fourth engagement means (38) of said locking nut (12) are configured for being able to slide in an axial direction in relation to each other, while being engaged in a locking engagement with each other.

6. An abutment system (100) according to any of the claims 1 - 5, wherein the third engagement means (34) of said locking pin defines a non-circular male cylinder, and wherein said fourth engagement means (38) of said locking nut defines a hole (36) in the form of a non-circular female cylinder.

7. An abutment system (100) according to claim 6, wherein said hole (36) in said locking nut (12) is a through-going hole or is a non-through-going hole.

8. An abutment system (100) according to claim 7, wherein the locking nut (12) is comprising a first axial portion (48) and an opposite, second axial portion (50), wherein said first axial portion of said locking nut (12) is having an extension in a direction perpendicular to its axial direction, which is sufficiently small to prevent a surface of said first axial portion (48) to enter into locking engagement with the sixth engagement means (46) of the abutment (2), whereas said second axial portion (50) of said locking nut (12) is having an extension in a direction perpendicular to its axial direction, which allows a surface of said second axial portion (50) to enter into locking engagement with the sixth engagement means (46) of the abutment (2).

9. An abutment system (100) according to any of the preceding claims, wherein the cross-section of said fifth engagement means (42) and said sixth engagement means (46) independently comprises a non-circular, partly rotational symmetrical geometry, (PRS), such as a partly rotational symmetry PRS of 360°/N, wherein N is an integer selected from the range of 2 - 100, such as 3 - 95, e.g. 4 - 90, such as 5 - 85, for example 6 - 80, such as 7 - 75, such as 8 - 70, for example 9 - 65, such as 10 - 60, e.g. 15 - 55, such as 20 - 50, for example 25 - 45 or 30 - 40; 360°/N thereby denotes the minimum magnitude of angular turn, around an axial axis, which will bring the geometry of said fifth engagement means and/or said sixth engagement means, respectively, into a similar orientation.

10. An abutment system (100) according to any of the preceding claims, wherein said first engagement means (28) of said locking pin (10) is having an extension in a direction perpendicular to its axial direction which is larger than the extension, in the same direction, of said second axial end (20) of said locking pin (10).

11. An abutment system (100) according to any of the preceding claims, wherein said locking pin (10) and said locking nut (12) constitute separate entities, or at least separable entities.

12. An abutment system (100) according to any of the preceding claims, wherein said locking pin (10) and said locking nut (12) are comprising attachment means for intermittent avoiding, any mutual displacement in relation to each other, in an axial direction, when being in locking engagement with each other, caused solely by action of gravity, in a situation where the locking pin is arranged in a vertical direction;
wherein said attachment means independently comprises magnetic and/or ferromagnetic properties of said pin (10) and/or said locking nut (12), respectively; and/or
wherein said attachment means comprises tolerance of dimensions between the third engagement means and the fourth engagement means are sufficiently narrow, so that an external force of 0.1 - 10 Newton, such as 0.5 - 9 Newton, such as 1 - 8 Newton, for example 1-7 Newton, such as 5 - 6 Newton, exerted onto the locking nut (12) is required in order to displace, in an axial direction, said locking nut (12) relative to said locking pin (10).

13. An implant system (200) comprising an abutment system (100) according to any of the claims 1 - 12 in combination with a dental implant (4) for being implanted into a jaw bone.

14. Use of an abutment system (100) according to any of the claims 1 - 12; or of an implant system (200) according to claim 13 for restoring a dental crown in the mouth of an individual, wherein said use is a non-therapeutic, cosmetic use.

15. A method for mounting an abutment (2) to a dental implant (4), said method comprises the steps of:
i) implanting a dental implant (4) in a jaw bone and awaiting said implant to become properly osseointegrated into said jaw bone;
ii) providing an abutment system (100) according to any of the claims 1 - 13;
iii) arranging the abutment (2) of said abutment system (100) onto said dental implant (4) in such a way that an axial end of said dental implant abuts an outer surface of said abutment (2);
iv) arranging said fastening screw (6) through said through-going hole (26) of said bottom part (24) of said abutment (2);
v) arranging said locking pin (10) onto said fastening screw (6) in such a way that said first engagement means (28) of said locking pin (10) enters into engagement with said second engagement means (30) of said fastening screw (6);
vi) arranging said locking nut (12) onto said second axial end (20) of said locking pin (10) in such a way that said third engagement means (34) of said locking pin (10) enters into locking engagement with said fourth engagement means (38) of said locking nut (12);
vii) turning said locking nut (12), thereby fastening said fastening screw (6) to said implant (2), while monitoring the torque applied to said locking nut (6);
viii) once the desired torque has been reached, sliding said locking nut (12) into said oblong cavity (22) of said abutment (2), thereby ensuring that said fifth engagement means (42) of said locking nut (12) enters into locking engagement with said sixth engagement means (46) of said inner oblong cavity (22) of said abutment (2); and thereby locking the fastening screw (6) to said abutment (2);
wherein said method is a non-therapeutic, cosmetic method.

## Amended claims

### Amended claims in accordance with Rule 137(2) EPC.

1. An abutment system (100) for use in dentistry, said abutment system comprises:
- an abutment (2) configured for being fastened to a dental implant (4);
- a fastening screw (6);
- a locking assembly (8) configured for locking said fastening screw (6) to said abutment (2); said locking assembly comprises a locking pin (10) and a locking nut (12);
- wherein said fastening screw (6) comprises a first axial end (14) and an opposite second axial end (16); said first axial end (14) being configured for being screwed into a dental implant (4);
- wherein said locking pin (10) comprises a first axial end (18) and an opposite, second axial end (20);
- wherein said abutment (2) comprises an inner oblong cavity (22); said cavity at a bottom part (24) thereof comprises a through-going hole (26) for said fastening screw;
- **characterized in that** said first axial end (18) of said locking pin (10) comprises a first engagement means (28); and wherein said second axial end (16) of said fastening screw (6) comprises a second engagement means (30); said first engagement means (28) is being configured for entering into locking engagement with said second engagement means (30) of said fastening screw (6); and **in that**
- said second axial end (20) of said locking pin (10) comprises a third engagement means (34); and wherein said locking nut (12) comprises a fourth engagement means (38); said third engagement means (34) of said locking pin (10) is being configured for entering into locking engagement with said fourth engagement means (38) of said locking nut (12); and **in that**
- an outer surface (40) of said locking nut (12) is defining a fifth engagement means (42); and wherein a surface (44) of said inner oblong cavity (22) of said abutment (2) defines a sixth engagement means (46), wherein said fifth engagement means (42) of said locking nut (12) is configured for entering into locking engagement with said sixth engagement means (46) of said abutment (2).

2. An abutment system (100) according to claim 1, wherein independently said first and said second engagement means (28,30) are configured for entering into releasably engagement with each other and/or wherein said third and said fourth engagement means (34,38) are configured for entering into releasable engagement with each other and/or wherein said fifth and said sixth engagement means (42,46) are configured for entering into releasably engagement with each other.

3. An abutment system (100) according to claim 1 or 2, wherein the first engagement means (28) of said first axial end (18) of said locking pin (10) comprises a male element, and wherein said second engagement means (30) of said second axial end (16) of said fastening screw (6) comprises a female element; or wherein the first engagement means (28) of said first axial end (18) of said locking pin (10) comprises a female element, and wherein said second engagement means (30) of said second axial end (16) of said fastening screw (6) comprises a male element.

4. An abutment system (100) according to claim 3, wherein said male element defines a male cylinder having a non-circular cross-section, and wherein said female element defines a female cylinder having a non-circular cross-section.

5. An abutment system (100) according to any of the preceding claims, wherein said third engagement means (34) of said locking pin (10) and said fourth engagement means (38) of said locking nut (12) are configured for being able to slide in an axial direction in relation to each other, while being engaged in a locking engagement with each other.

6. An abutment system (100) according to any of the claims 1 - 5, wherein the third engagement means (34) of said locking pin defines a non-circular male cylinder, and wherein said fourth engagement means (38) of said locking nut defines a hole (36) in the form of a non-circular female cylinder.

7. An abutment system (100) according to claim 6, wherein said hole (36) in said locking nut (12) is a through-going hole or is a non-through-going hole.

8. An abutment system (100) according to claim 7, wherein the locking nut (12) is comprising a first axial portion (48) and an opposite, second axial portion (50), wherein said first axial portion of said locking nut (12) is having an extension in a direction perpendicular to its axial direction, which is sufficiently small to prevent a surface of said first axial portion (48) to enter into locking engagement with the sixth engagement means (46) of the abutment (2), whereas said second axial portion (50) of said locking nut (12) is having an extension in a direction perpendicular to its axial direction, which allows a surface of said second axial portion (50) to enter into locking engagement with the sixth engagement means (46) of the abutment (2).

9. An abutment system (100) according to any of the preceding claims, wherein the cross-section of said fifth engagement means (42) and said sixth engagement means (46) independently comprises a non-circular, partly rotational symmetrical geometry, (PRS), such as a partly rotational symmetry PRS of 360°/N, wherein N is an integer selected from the range of 2 - 100, such as 3 - 95, e.g. 4 - 90, such as 5 - 85, for example 6 - 80, such as 7 - 75, such as 8 - 70, for example 9 - 65, such as 10 - 60, e.g. 15 - 55, such as 20 - 50, for example 25 - 45 or 30 - 40; 360°/N thereby denotes the minimum magnitude of angular turn, around an axial axis, which will bring the geometry of said fifth engagement means and/or said sixth engagement means, respectively, into a similar orientation.

10. An abutment system (100) according to any of the preceding claims, wherein said first engagement means (28) of said locking pin (10) is having an extension in a direction perpendicular to its axial direction which is larger than the extension, in the same direction, of said second axial end (20) of said locking pin (10).

11. An abutment system (100) according to any of the preceding claims, wherein said locking pin (10) and said locking nut (12) constitute separate entities, or at least separable entities.

12. An abutment system (100) according to any of the preceding claims, wherein said locking pin (10) and said locking nut (12) are comprising attachment means for intermittent avoiding, any mutual displacement in relation to each other, in an axial direction, when being in locking engagement with each other, caused solely by action of gravity, in a situation where the locking pin is arranged in a vertical direction;
wherein said attachment means independently comprises magnetic and/or ferromagnetic properties of said pin (10) and/or said locking nut (12), respectively; and/or
wherein said attachment means comprises tolerance of dimensions between the third engagement means and the fourth engagement means are sufficiently narrow, so that an external force of 0.1 - 10 Newton, such as 0.5 - 9 Newton, such as 1 - 8 Newton, for example 1 - 7 Newton, such as 5 - 6 Newton, exerted onto the locking nut (12) is required in order to displace, in an axial direction, said locking nut (12) relative to said locking pin (10).

13. An implant system (200) comprising an abutment system (100) according to any of the claims 1 - 12 in combination with a dental implant (4) for being implanted into a jaw bone.
